(19) Europäisches Patentamt / European Patent Office / Office européen des brevets

(11) **EP 3 601 003 B1**

(12) **EUROPÄISCHE PATENTSCHRIFT**

(45) Veröffentlichungstag und Bekanntmachung des Hinweises auf die Patenterteilung:
**16.06.2021  Patentblatt 2021/24**

(21) Anmeldenummer: **18704409.4**

(22) Anmeldetag: **16.01.2018**

(51) Int Cl.:
**B60W 50/00** *(2006.01)*     **B60W 30/00** *(2006.01)*

(86) Internationale Anmeldenummer:
**PCT/EP2018/051020**

(87) Internationale Veröffentlichungsnummer:
**WO 2018/171950 (27.09.2018 Gazette 2018/39)**

(54) **FAHRASSISTENZSYSTEMBASIERTES LENKUNTERSTÜTZUNGSVERFAHREN, LENKUNTERSTÜTZUNGSSYSTEM UND FAHRZEUG**

TRAVEL ASSISTANCE BASED VEHICLE POWER STEERING METHOD, VEHICLE POWER STEERING AND VEHICLE

MÉTHODE D'ASSISTANCE POUR DIRECTION DE VÉHICULE BASÉE SUR L'AIDE À LA CIRCULATION AUTOMATIQUE, DIRECTION ASSISTÉE ET VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.03.2017  DE 102017205030**

(43) Veröffentlichungstag der Anmeldung:
**05.02.2020  Patentblatt 2020/06**

(73) Patentinhaber: **VOLKSWAGEN AKTIENGESELLSCHAFT**
**38440 Wolfsburg (DE)**

(72) Erfinder:
- KREIS, Christopher
  38126 Braunschweig (DE)
- RÜGER, Tobias
  38106 Braunschweig (DE)

(56) Entgegenhaltungen:
**EP-A1- 2 223 836     FR-A1- 3 026 708**

**Beschreibung**

Die vorliegende Erfindung betrifft ein fahrassistenzsystembasiertes Lenkunterstützungsverfahren für ein Fahrzeug, ein Lenkunterstützungssystem sowie ein Fahrzeug als solches und insbesondere ein Kraftfahrzeug.

Lenkunterstützungsverfahren und Lenkunterstützungssysteme und damit im Zusammenhang stehende Fahrassistenzsysteme sind eingerichtet, in Abhängigkeit von einer Fahrsituation des Fahrzeugs einen Fahrer beim Lenken des Fahrzeugs zu unterstützen, nämlich durch bedingte und gesteuerte Eingriffe in das Lenksystem, indem zum Beispiel gegebenenfalls ein Stellmoment zusätzlich zu einem vom Fahrer ausgeübten Moment vom zu Grunde liegenden Lenksystem des Fahrzeugs angefordert und durch dieses eingebracht wird. Ein gattungsgemässes Fahrassistenzsystembasiertes Lenkunterstützungsverfahren für ein Fahrzeug ist in FR 3 026 708 A1 offenbart.

Problematisch bei herkömmlichen Lenkunterstützungsverfahren und Lenkunterstützungssystemen, die mit einem Fahrassistenzsystem zusammenwirken, ist einerseits die mangelnde Überprüfbarkeit und Plausibilisierung der vom Fahrassistenzsystem an das Lenksystem und insbesondere an die Lenkunterstützung ausgegebenen Anforderungssignale sowie deren mangelnde Flexibilität im Hinblick auf verschiedene Fahrzeugtypen oder -klassen auf Grund der vergleichsweise festen und spezifischen Fahrzeugauslegung.

Der Erfindung liegt die Aufgabe zu Grunde, ein fahrassistenzsystembasiertes Lenkunterstützungsverfahren und ein Lenkunterstützungssystem zu schaffen, welche für einen Benutzer ein gesteigertes Maß an Fahrsicherheit bieten und auf Grund ihres hohen Grades an Flexibilität bei einer Vielzahl von Fahrzeugtypen und -klassen einsetzbar sind. Ferner soll ein mit einem derartigen Verfahren und/oder System betreibbares Fahrzeug geschaffen werden.

Die der Erfindung zu Grunde liegende Aufgabe wird bei einem fahrassistenzsystembasierten Lenkunterstützungsverfahren erfindungsgemäß mit den Merkmalen des Anspruchs 1, bei einem fahrassistenzsystembasierten Lenkunterstützungssystem erfindungsgemäß mit den Merkmalen des Anspruchs 13 sowie bei einem Fahrzeug erfindungsgemäß mit den Merkmalen des Anspruchs 14 gelöst. Vorteilhafte Weiterbildungen sind Gegenstand der jeweiligen abhängigen Ansprüche.

Gemäß der vorliegenden Erfindung wird ein fahrassistenzsystembasiertes Lenkunterstützungsverfahren für ein Fahrzeug mit einem Lenksystem mit Lenkunterstützung und insbesondere für ein Kraftfahrzeug zum Unterstützen eines Fahrers beim Lenken des Fahrzeugs über das Lenksystem geschaffen, bei welchem (i) eine Fahrsituation des Fahrzeugs erfasst und (ii) in Abhängigkeit von der Fahrsituation auf das Fahrverhalten des Fahrzeugs eingegriffen wird, indem das zu Grunde liegende Fahrassistenzsystem einen Sollwert für mindestens eine Regelgröße des Lenksystems bestimmt und den Sollwert über eine Fahrassistenzschnittstelle vom Lenksystem bedingt anfordert, (iii) wobei durch eine der Fahrassistenzschnittstelle nachgeschaltete und der Anforderung an das Lenksystem vorgeschaltete Überwachungsfunktion eine Fehleraktion veranlasst wird, falls der Sollwert ein vordefiniertes Zulässigkeitskriterium nicht erfüllt, und durch die Fehleraktion bewirkt wird, - dass ein vom Fahrassistenzsystem bestimmter Sollwert einer Regelgröße vom Fahrassistenzsystem neu bestimmt und überwacht und bedingt vom Lenksystem angefordert wird und/oder - dass von der Überwachungsfunktion und/oder vom Fahrassistenzsystem ein sicherer Ersatzsollwert bereitgestellt und überwacht und bedingt vom Lenksystem angefordert wird.

Es ist somit ein Kernaspekt der vorliegenden Erfindung, eine bevorstehende, aber noch nicht ausgeführte Anforderung durch ein Fahrassistenzsystem auf Zulässigkeit zu überprüfen, um zu verhindern, dass durch eine tatsächlich bewirkte Anforderung des Fahrassistenzsystems an das Lenksystem das Fahrzeug eine Fahrsituation einnimmt, in welcher der Fahrer das Fahrzeug nicht mehr beherrschen kann.

Ein besonders hohes Maß an Zuverlässigkeit und Sicherheit ergibt sich für den Anwender dann, wenn gemäß einer bevorzugten Ausgestaltungsform des Lenkunterstützungsverfahrens durch die Überwachungsfunktion vom Fahrassistenzsystem bestimmte Sollwerte mehrerer Regelgrößen überwacht werden, insbesondere in paralleler Weise, in simultaner Weise, mittels einer ODER-Verknüpfung und/oder mittels einer Summation oder andersgearteten gemeinsamen Verarbeitung.

Als Fehleraktionen sind je nach Anwendung unterschiedliche Szenarien denkbar, um die Entstehung einer gefährlichen Fahrsituation für das Fahrzeug zu vermeiden oder das Fahrzeug in eine sichere Fahrsituation zurückzuführen.

So ist es bei einer vorteilhaften Weiterbildung des erfindungsgemäßen Lenkunterstützungsverfahrens vorgesehen, dass durch die Fehleraktion bewirkt wird, dass ein vom Fahrassistenzsystem bestimmter Sollwert einer Regelgröße vom Lenksystem nicht angefordert wird.

Nach der Erfindung ist es vorgesehen, dass durch die Fehleraktion bewirkt wird, dass ein vom Fahrassistenzsystem bestimmter Sollwert einer Regelgröße vom Fahrassistenzsystem neu bestimmt und überwacht und bedingt vom Lenksystem angefordert wird.

Des Weiteren ist nach dem erfindungsgemäßen fahrassistenzbasierten Lenkunterstützungsverfahren vorgesehen, dass durch die Fehleraktion bewirkt wird, dass von der Überwachungsfunktion und/oder vom Fahrassistenzsystem ein sicherer Ersatzsollwert bereitgestellt und überwacht und bedingt vom Lenksystem angefordert wird.

All diese Maßnahmen bieten sich im Zusammenhang mit sämtlichen vom Fahrassistenzsystem beeinflussbaren Regelgrößen an.

Bei konkreten Anwendungen können die tatsächlich verwendeten Regelgrößen eine ganz unterschiedliche Gestalt annehmen und miteinander in komplexer Weise kombiniert werden.

So ist es gemäß einer bevorzugten Ausgestaltungsform des erfindungsgemäßen Lenkunterstützungsverfahrens möglich, dass als Regelgröße der Wert einer Lenkunterstützungskraft, der Wert eines Lenkunterstützungsmoments, der Wert eines Lenkwinkels und/oder ein Wert im Zusammenhang mit einer Position und/oder Orientierung einer zu Grunde liegenden Aktuatoreinheit, zum Beispiel eines Stellmotors oder dergleichen, und/oder eines damit betätigten Lenkelements, zum Beispiel einer Zahnstange oder Zahnschiene, verwendet werden.

Die Zuverlässigkeit und Sicherheit des erfindungsgemäßen Lenkunterstützungsverfahrens können weiter gesteigert werden, indem durch die Überwachungsfunktion beim Überprüfen des Zulässigkeitskriteriums mehrere Teilkriterien geprüft werden, insbesondere aus einem vorgegebenen Satz von Teilkriterien, in simultaner und/oder paralleler Weise. Das bedeutet insbesondere, dass gleichzeitig und parallel unterschiedliche Überwachungsprozesse in Bezug auf unterschiedliche Regelgrößen ausgeführt werden können.

Dabei ist es von besonderem Vorteil, wenn das Zulässigkeitskriterium oder ein Teilkriterium als nicht erfüllt erkannt wird bzw. werden, wenn der vom Fahrassistenzsystem bestimmte Sollwert der mindestens einen Regelgröße des Lenksystems zu einer für einen Fahrer des Fahrzeugs nicht mehr beherrschbaren Fahrsituation korrespondiert.

Zur Konkretisierung der Umstände, die eine Überprüfbarkeit eines Zulässigkeitskriteriums oder eines Teilkriteriums zu ermöglichen, können formelmäßige Zusammenhänge und/oder vorgefertigte Auslesetabellen, zum Beispiel in Form von Look-up-Tables, herangezogen werden, wobei für die Fahrsituation und den Betriebszustand des Fahrzeugs charakteristische Werte von Messgrößen als Parameter zur Bewertung Eingang finden.

Im Folgenden werden dazu weitere konkretisierte Szenarien geschildert:
Bei einer vorteilhaften Weiterbildung des erfindungsgemäßen Lenkunterstützungsverfahrens ist es vorgesehen, dass durch die Überwachungsfunktion eine Maximalwertüberwachung eines Sollwerts einer Regelgröße durchgeführt wird.

Das Zulässigkeitskriterium oder ein Teilkriterium kann oder können als nicht erfüllt erkannt werden, wenn der Betrag des Sollwerts der Regelgröße einen vorgegebenen und/oder vordefinierten maximal zulässigen Betrag überschreitet. Dieses Kriterium kann auf verschiedene Regelgrößen, wie sie oben exemplarisch angegeben wurden, angewandt werden.

Bei einer anderen vorteilhaften Ausgestaltungsform des erfindungsgemäßen Lenkunterstützungsverfahrens ist es vorgesehen, dass durch die Überwachungsfunktion eine Überwachung eines Gradienten eines oder des Sollwerts einer Regelgröße durchgeführt wird.

Das Zulässigkeitskriterium oder ein Teilkriterium kann oder können als nicht erfüllt erkannt werden, wenn der Wert des Gradienten eines Sollwerts einer Regelgröße und/oder der Regelgröße selbst eine vorgegebene obere Grenze überschreitet und/oder eine vorgegebene untere Grenze unterschreitet.

Dabei können in Relation zur Größe des Sollwerts und/oder der Regelgröße kurzfristige und/oder hochfrequente Schwankungen im Sollwert im Sinne eines Tiefpassfilters behandelt werden, so dass kurzfristige und/oder hochfrequente Schwankungen zulässig sind, ohne dass es zu einer Auslösung einer Fehleraktion und/oder einer Anforderung an das Lenksystem kommt.

Alternativ oder zusätzlich kann es vorgesehen sein, dass durch die Überwachungsfunktion eine Überwachung im Sinne einer Überlenkbarkeit durchgeführt wird.

Das Zulässigkeitskriterium oder ein Teilkriterium kann oder können als nicht erfüllt erkannt werden, wenn der Sollwert der als Regelgröße verwendeten Ausgangskraft $F_{Position}$ einer zu Grunde liegenden Aktuatoreinheit als Positionsgeber des Lenksystems eine obere Kraftgrenze $F_{pos,Limit}$ überschreitet und/oder eine untere Kraftgrenze $F_{neg,Limit}$ unterschreitet.

Dabei kann es insbesondere vorgesehen sein, dass die obere Kraftgrenze $F_{pos,Limit}$ und/oder die untere Kraftgrenze $F_{neg,Limit}$, zum Beispiel auch dynamisch, in Abhängigkeit von der Lenkkraftunterstützung durch das Lenksystem und/oder von einem vom Fahrer manuell aufgebrachten Lenkmoment angepasst sind oder werden.

Zusätzlich oder alternativ kann es vorgesehen sein, dass die obere Kraftgrenze $F_{pos,Limit}$ und/oder die untere Kraftgrenze $F_{neg,Limit}$ bestimmt sind oder werden gemäß den nachfolgenden Beziehungen (1) bis (4), nämlich gemäß

$$F_{pos,Limit}\left(M_{Sensor}, F_{Untrstützung}\right) = F_{max} + \frac{\left(F_{max} - F_{min}\right) \cdot M_{Sensor}}{M_{max}} - \min\left(F_{Unterstützung}, 0\right), \tag{1}$$

falls nur ein geringes Gegenmoment durch den Fahrer am Lenksystem des Fahrzeugs aufgebracht wird und somit $M_{Sensor} > -M_{max}$ gilt, gemäß

$$F_{pos,Limit}\left(M_{Sensor}, F_{Untrstützung}\right) = F_{min} + \min\left(F_{Unterstützung}, 0\right) \cdot \frac{M_{max}}{2 \cdot M_{Sensor} + M_{max}}, \qquad (2)$$

falls ein hohes Gegenmoment durch den Fahrer am Lenksystem des Fahrzeugs aufgebracht wird und somit $M_{Sensor} \leq -M_{max}$ gilt, gemäß

$$F_{neg,Limit}\left(M_{Sensor}, F_{Untrstützung}\right) = -F_{max} + \frac{\left(F_{max} - F_{min}\right) \cdot M_{Sensor}}{M_{max}} - \max\left(F_{Unterstützung}, 0\right) \qquad (3)$$

falls nur ein geringes Gegenmoment durch den Fahrer am Lenksystem (20) des Fahrzeugs (1) aufgebracht wird und somit $M_{Sensor} < M_{max}$ gilt, und/oder gemäß

$$F_{neg,Limit}\left(M_{Sensor}, F_{Untrstützung}\right) = -F_{min} - \max\left(F_{Unterstützung}, 0\right) \cdot \frac{M_{max}}{2 \cdot M_{Sensor} - M_{max}}, \qquad (4)$$

falls ein hohes Gegenmoment durch den Fahrer am Lenksystem (20) des Fahrzeugs (1) aufgebracht wird und somit $M_{Sensor} \geq M_{max}$ gilt.

Dabei bezeichnen $F_{pos,Limit}$ die obere Kraftgrenze, $F_{neg,Limit}$ die untere Kraftgrenze, $M_{Sensor}$ das mittels eines Sensors gemessene durch den Fahrer des Fahrzeugs (1) aufgebrachte Handmoment, $M_{max}$ das maximale Lenkmoment, $F_{Unterstützung}$ die aktuell aufgebrachte Lenkunterstützungskraft, $F_{min}$ eine minimale Kraft, $F_{max}$ eine maximale Kraft, min die Minimumsfunktion und max die Maximumsfunktion.

Gemäß einer anderen vorteilhaften Weiterbildung des erfindungsgemäßen Lenkunterstützungsverfahrens ist es vorgesehen, dass durch die Überwachungsfunktion eine Überwachung der Lage eines Sollwerts einer Regelgröße in Bezug auf einen Zulässigkeitsbereich durchgeführt wird. Dieser wird durch eine aktuell vorliegende Geschwindigkeit einer zu Grunde liegenden Aktuatoreinheit und/oder eines damit betätigten Lenkelements, insbesondere einer Zahnstange, definiert.

Dabei können das Zulässigkeitskriterium oder ein Teilkriterium als nicht erfüllt erkannt werden, wenn der Sollwert außerhalb des oder eines aktuellen Zulässigkeitsbereichs liegt, wobei insbesondere bei der Definition des Zulässigkeitsbereichs ein aktueller Wert einer Geschwindigkeit des Fahrzeugs berücksichtigt werden kann.

Zusätzlich oder alternativ kann es vorgesehen sein, dass zur Plausibilisierung durch die Überwachungsfunktion geprüft wird, ob bei einem von Null verschiedenen Sollwert für die oder eine Regelgröße durch das zu Grunde liegenden Fahrassistenzsystem eine Anforderung an das Lenksystem erfolgt oder vorliegt.

Ferner kann zusätzlich oder alternativ eine etwaig vorliegende Statusinformation des zu Grunde liegenden Fahrassistenzsystems erfasst und ausgewertet werden, die Überwachungsfunktion weiter zu steuern.

Ferner kann als zusätzliche oder alternative Maßnahmen vorgesehen sein, dass die Überwachungsfunktion eingerichtet ist, bei Geschwindigkeiten des Fahrzeugs, die eine vorgegebene minimale Geschwindigkeit, insbesondere von 12 km/h, unterschreiten, Parametergrenzen bei der Überwachung eines Sollwerts einer Regelgröße aufzuweiten.

Des Weiteren können bei Anwesenheit eines Fahrers im Fahrzeug eine Berührung eines Fahrers am Lenkrad des Lenksystems und/oder eine Trägheit des Lenkrads (21), der Lenksäule und/oder der Lenkwelle (22) erfasst und berücksichtigt werden.

Erfindungsgemäß können besonders zuverlässig Fehlfunktionen vermieden werden, wenn, gemäß einer anderen Ausgestaltungsform des erfindungsgemäßen Lenkunterstützungsverfahrens, die Überwachungsfunktion zusätzlich zu einer Realisierung als eine erste Überwachungseinheit im Bereich der Überwachungsebene des Lenksystems im Bereich der Lenkfunktionsebene des Lenksystems mit einer zweiten Realisierung als eine zweite Überwachungseinheit ausgebildet ist.

Gemäß einem weiteren Aspekt der vorliegenden Erfindung wird auch ein fahrassistenzsystembasiertes Lenkunterstützungssystem geschaffen, welches auch als fahrassistenzsystembasierte Lenkunterstützung bezeichnet werden kann und welches dazu dient, bei einem Fahrzeug und insbesondere einem Kraftfahrzeug einen Fahrer beim Lenken des Fahrzeugs zu unterstützen. Dabei ist eine Erfassungs- und Steuereinheit ausgebildet, welche eingerichtet ist, ein fahrassistenzsystembasiertes Lenkunterstützungsverfahren gemäß der vorliegenden Erfindung auszuführen.

Ferner schafft die vorliegende Erfindung auch ein Fahrzeug und insbesondere ein Kraftfahrzeug, welches mit einem Lenksystem mit fahrassistenzsystembasierter Lenkunterstützung zum Lenken einer Bewegung des Fahrzeugs durch einen Fahrer ausgebildet ist. Die Lenkunterstützung ist gemäß der vorliegenden Erfindung ausgebildet.

Kurzbeschreibung der Figuren

Weitere Einzelheiten, Merkmale und Vorteile der Erfindung ergeben sich aus der nachfolgenden Beschreibung und den Figuren.

Figur 1      zeigt in schematischer Ansicht eine Ausführungsform des erfindungsgemäßen Fahrzeugs unter Verwendung einer Ausführungsform der erfindungsgemäßen Lenkunterstützung und/oder mit Ausführung einer Ausführungsform des erfindungsgemäßen fahrassistenzsystembasierten Lenkunterstützungsverfahrens.

Figur 2      zeigt nach Art eines Blockdiagramms eine Ausführungsform des erfindungsgemäßen verwendeten Lenkunterstützungssystems.

Figur 3      zeigt nach Art eines Blockdiagramms eine Ausführungsform der erfindungsgemäßen verwendeten Überwachungsfunktion.

Figuren 4 und 5      zeigen Graphen, welche Grundlagen und Wirkungsweise von Ausführungsformen der erfindungsgemäß verwendeten Überwachungsfunktion illustrieren.

Figur 6      zeigt schematisch nach Art eines Blockdiagramms eine Ausführungsform einer Erfassungs- und Steuereinheit 10, welche im Zusammenhang mit einem erfindungsgemäßen Lenkunterstützungsverfahren zum Einsatz kommen kann.

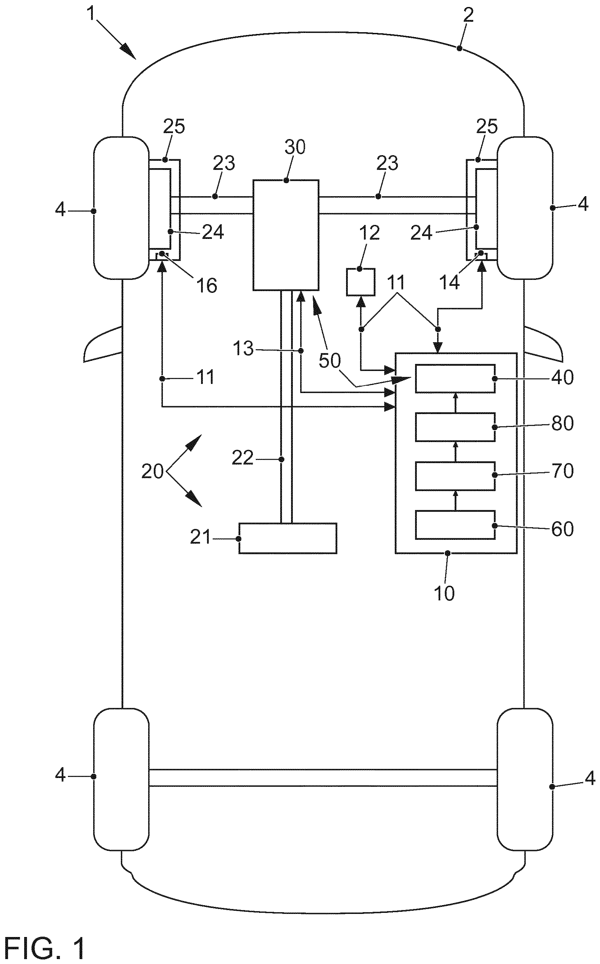

Nachfolgend werden unter Bezugnahme auf die Figuren 1 bis 6 Ausführungsbeispiele und der technische Hintergrund der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Figur 1 zeigt in schematischer Ansicht eine Ausführungsform des erfindungsgemäßen Fahrzeugs 1 unter Verwendung einer Ausführungsform der erfindungsgemäßen Lenkunterstützungssystems 50, welches auch kurz als Lenkunterstützung bezeichnet wird, und/oder Lenkunterstützungsverfahrens.

Das erfindungsgemäße Fahrzeug 1 weist einen Rahmen oder eine Karosserie 2 und in diesen aufgenommene Räder 4 zur Fortbewegung auf. Die vorderen Räder 4 sind über ein Lenksystem 20 als Lenkung mittels eines Lenkrads 21 und einer daran angebrachten Lenkwelle 22 sowie sich daran anschließenden Spurstangen, Zahnschiene oder Zahnstange 23 lenkbar, welche über Lenkgelenke 24 entsprechender Radträger 25 mit den Rädern 4 verbunden sind.

Zusätzlich oder alternativ zu einem vom Fahrer über das Lenkrad 21 aufgebrachten Lenkmoment kann das vorgesehene erfindungsgemäße Lenkunterstützungssystem 50 mit der Erfassungs- und Steuereinheit 10 und der Aktuatoreinheit 30 ein Stellmoment generieren und in das Lenksystem 20 zur Lenkung der Räder 4 über Betätigung der Aktuatoreinheit 30 einbringen.

Dabei wird das Lenkunterstützungssystem 50 maßgeblich von einem Fahrassistenzsystem 60 beeinflusst, welches über eine Fahrassistenzschnittstelle 70 für ein stärker automatisiertes Fahren Anforderungen an die Lenkunterstützung 50 stellt, indem diese zum Beispiel auf die Lenkunterstützungssteuerung 40 einwirkt, zum Beispiel durch Anforderungen, über die Aktuatoreinheit 30 entsprechende Stellkräfte, Stellmomente und/oder Stellwinkel auszubilden.

Über Sensoren 12, 14 und 16, welche über eine Erfassungs- und Steuerleitung 11 mit der Erfassungs- und Steuereinheit 10 verbunden sind, können Fahrzeugparameter und/oder Fahrparameter zur Charakterisierung einer Fahrsituation und/oder des Fahrverhaltens des Fahrzeugs 1 erfasst werden. Diese werden der Lenkunterstützungssteuerung 40 und/oder dem Fahrassistenzsystem 60 zugeführt und dort verarbeitet.

Dabei können über die Sensoren 12, 14, 16 ein Lenkwinkel, ein Gierwinkel, eine Raddrehzahl, ein über das Lenkrad 21 ausgeübtes Lenkmoment, das auch als Hand- oder Fahrermoment bezeichnet wird, ein über die Aktuatoreinheit 30 ausgeübtes Stellmoment, deren Änderungsraten und/oder deren jeweilige zweite Ableitung nach der Zeit (Beschleunigungen) erfasst werden. Des Weiteren können Orientierungen, Stellungen, Positionen und deren zeitliche Änderungen - zum Beispiel im Sinne einer Geschwindigkeit, einer Winkelgeschwindigkeit, einer Beschleunigung, einer Winkelbeschleunigung - im Hinblick auf eine Spurstange 23, eine Zahnstange oder Zahnschiene, ein Gelenk 24 und/oder einen Radträger 25 erfasst werden.

Die von der Erfassungs- und Steuereinheit 10 erfassten Werte können dazu genutzt werden, um - zum Beispiel nach einer Bewertung durch die Lenkunterstützungssteuerung 40 und/oder durch das Fahrassistenzsystem 60 - über die zusätzliche Erfassungs- und Steuerleitung 13 eine der Fahrsituation und/oder dem Fahrverhalten des Fahrzeugs 1 entsprechende Betätigung des Aktuators 30 zu veranlassen, um ein angepasstes Stellmoment im Lenksystem 20 zu generieren und den Rädern 4 aufzuprägen.

Erfindungsgemäß ist im Zusammenhang mit der Erfassungs- und/oder Steuereinheit 10 gemäß Figur 1 und dem darin enthaltenen Fahrassistenzsystem 60 im Zusammenhang mit der Lenkunterstützung 50 und der Lenkunterstützungssteuerung 40 zur Beeinflussung des Lenksystems 20 eine Überwachungsfunktion 80 ausgebildet. Die erfindungsgemäß vorgesehene Überwachungsfunktion 80 ist der Fahrassistenzschnittstelle 70 nachgeschaltet und der Lenkunterstützungssteuerung 40, an welche Anforderungen durch das Fahrassistenzsystem 60 gerichtet werden, vorgeschaltet.

Durch das erfindungsgemäße Vorsehen der Überwachungsfunktion 80 ergibt sich die Möglichkeit, eine Anforderung des Fahrassistenzsystems 60 an das Lenksystem 20, nämlich vermittelt über die Lenkunterstützungssteuerung 40 der Lenkunterstützung 50, vor der tatsächlichen Ausführung zu überprüfen und gegebenenfalls zu modifizieren oder zu unterdrücken, um dadurch zu verhindern, dass das Fahrzeug 1 entweder in einer Fahrsituation verbleibt, die durch einen Fahrer nicht mehr beherrschbar ist, oder auch in eine derartige und nicht mehr beherrschbare Fahrsituation gerät.

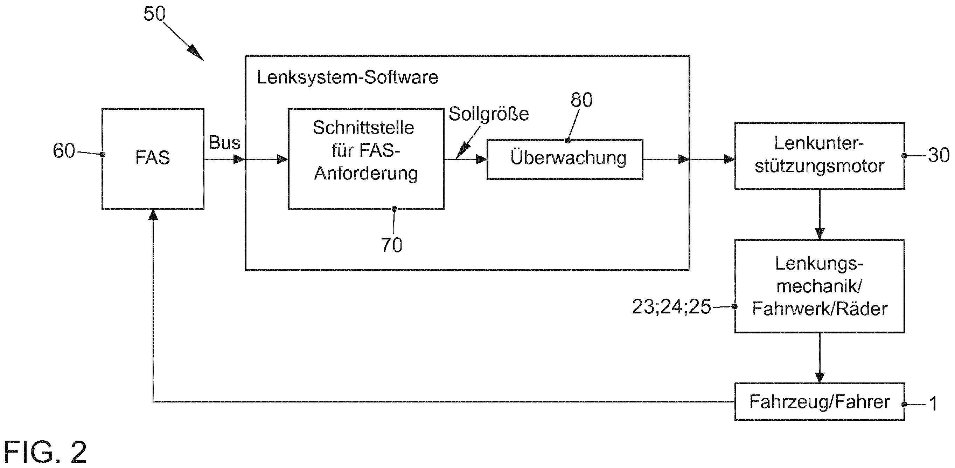

Figur 2 zeigt nach Art eines Blockdiagramms eine Ausführungsform des erfindungsgemäßen verwendeten Lenkunterstützungssystems 50 eines Lenksystems 20 mit einem Fahrassistenzsystem 60, welches über eine Fahrassistenzschnittstelle 70, vermittelt durch eine Lenkunterstützungssteuerung 40 der Lenkunterstützung 50, an das Lenksystem 20 bedingt entsprechende Anforderungen richtet.

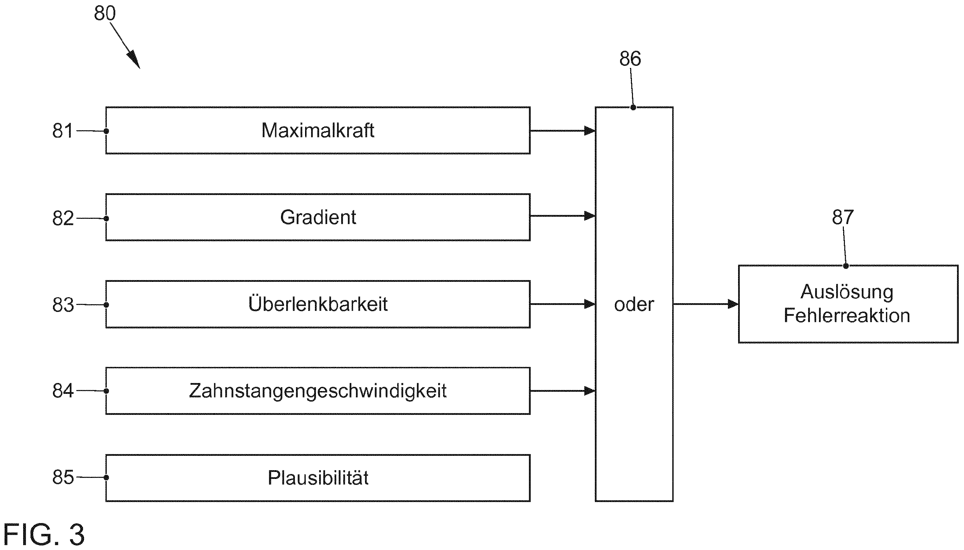

Figur 3 zeigt nach Art eines Blockdiagramms eine Ausführungsform der erfindungsgemäßen verwendeten Überwachungsfunktion 80.

Die in Figur 3 dargestellte Überwachungsfunktion weist fünf simultane und/oder parallele Prozesse 81 bis 85 zur Überwachung auf, nämlich eines Maximalwerts, eines Gradienten, einer Überlenkbarkeit, einer Aktuatorgeschwindigkeit oder einer Geschwindigkeit eines Lenkelements 23, 24, 25, insbesondere der Geschwindigkeit einer Zahnstange oder einer Zahnschiene des Lenksystems 20, sowie der Plausibilität, letztere zum Beispiel auf der Grundlage von durch das Fahrassistenzsystem 60 ausgegebener Statusinformation.

Die Ergebnisse der Überwachungsprozesse 81 bis 85 der Überwachungsfunktion 80 werden mittels einer Verknüpfung 86, zum Beispiel mittels einer ODER-Verknüpfung, logisch gekoppelt, wobei das sich ergebende Ergebnis bedingt und/oder gesteuert zur Auslösung einer Fehlerreaktion 87 führt.

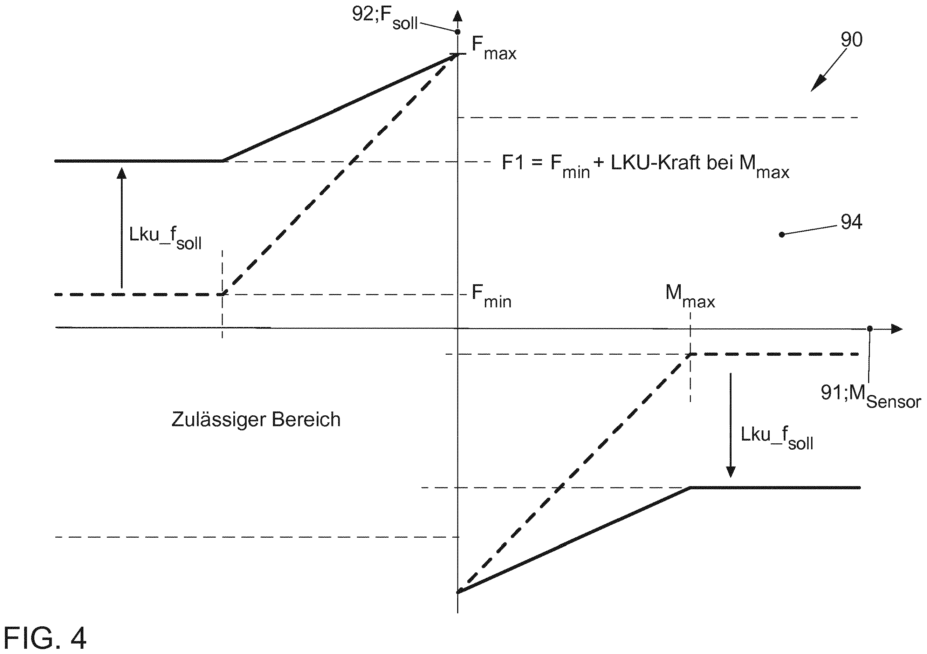

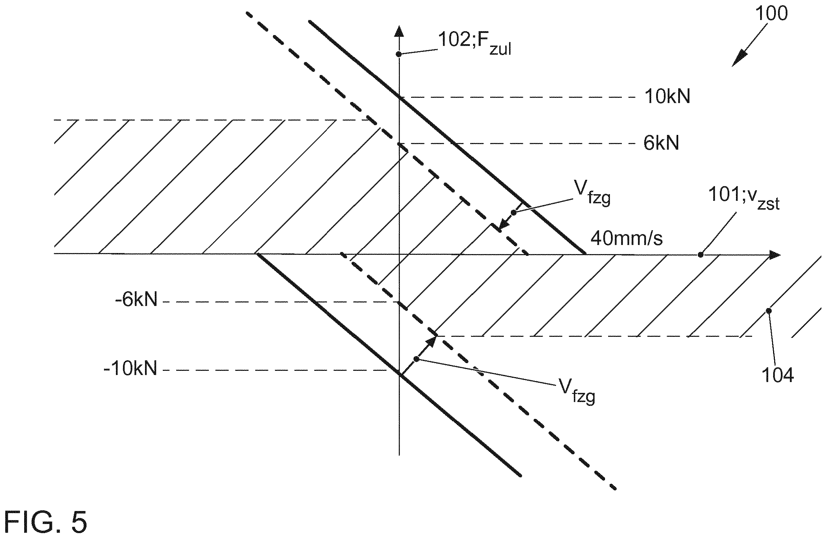

Figuren 4 und 5 zeigen Graphen 90 bzw. 100, welche Grundlagen und Wirkungsweise von Ausführungsformen der erfindungsgemäß verwendeten Überwachungsfunktion 80 illustrieren.

Beim Graphen 90 der Figur 4 ist auf der Ordinate 92 die Stellkraft $F_{soll}$ als Sollkraft und als Funktion des mittels eines Sensors ermittelten Werts $M_{Sensor}$ für ein vom Fahrer mit der Hand ausgeübtes Drehmoment dargestellt, welches auf der Abszisse 91 aufgetragen ist. Im Zusammenhang mit weiterer Parameter ergibt sich der mit 94 bezeichnete zulässige Bereich für die Betriebsparameter $F_{soll}$ und $M_{Sensor}$.

Beim Graphen 100 der Figur 5 ist auf der Ordinate 102 die zulässige Kraft $F_{zul}$ dargestellt als Funktion der Geschwindigkeit $v_{zst}$ eines Lenkelements 23, 24, 25 des Lenksystems 20, zum Beispiel einer Zahnstange, welche auf der Abszisse 101 aufgetragen ist.

Im Zusammenhang mit weiteren Parametern, insbesondere der Geschwindigkeit $V_{fzg}$ ergibt sich der für die Betriebsparameter $F_{zul}$ und $v_{zst}$ zulässige Bereich 104.

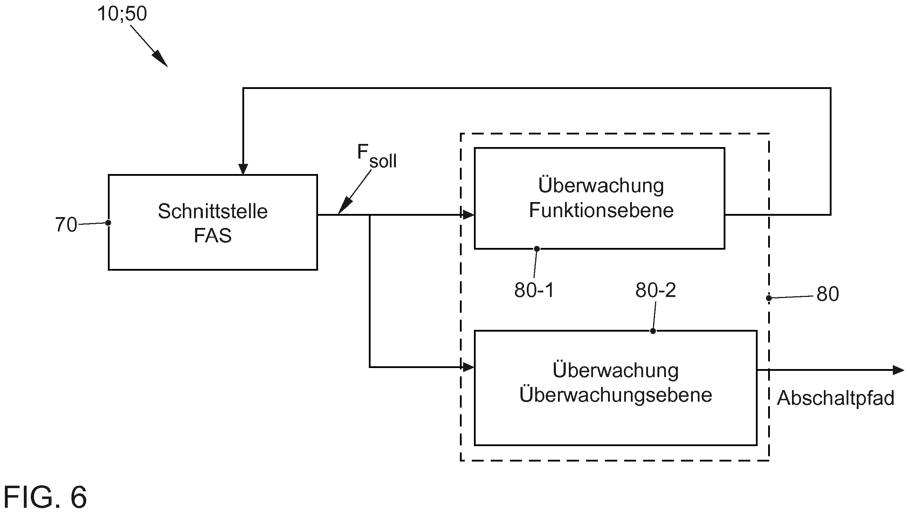

Figur 6 zeigt schematisch nach Art eines Blockdiagramms eine Ausführungsform einer Erfassungs- und Steuereinheit 10, welche im Zusammenhang mit einem erfindungsgemäßen Lenkunterstützungsverfahren und einer Lenkunterstützung 50 zum Einsatz kommen kann.

Bei dieser Ausführungsform ist die erfindungsgemäß vorgesehene Überwachungsfunktion einmal auf der Funktionsebene oder Lenkebene als erste Komponente 80-1 zusätzlich auf einer Überwachungsebene als zweite Komponente 80-2 im Zusammenhang mit einem Abschaltpfad ausgebildet. Dadurch kann eine Fehlfunktion mit besonders hoher Zuverlässigkeit vermieden werden.

Diese und weitere Merkmale und Eigenschaften der vorliegenden Erfindung werden an Hand der folgenden Darlegungen weiter erläutert:

Die vorliegende Erfindung betrifft unter anderem auch ein Lenksystem 20 für ein Fahrzeug 1 mit einer Funktionalität zur robusten Erkennung von internen Fehlern und fehlerhaften externen Anforderungen, zum Beispiel bei Anforderungen durch ein Fahrassistenzsystem 60.

Bei Lenksystemen 20 werden unter anderem folgende Aspekte betrachtet:

Auf Grund der Klassifizierung elektromechanischer Lenksysteme als sicherheitsrelevantes Bauteil bestehen bei dieser Fahrzeugkomponente sehr hohe Anforderungen bezüglich der Ausfallsicherheit, der Fehlererkennung und der im Fehlerfall einzuleitenden Fehlerreaktionen. Insbesondere bei der Entwicklung von auf dem Steuergerät implementierten Lenkfunktionen müssen verschiedene Maßnahmen umgesetzt werden.

Lenkfunktionen berechnen auf Basis von verschiedenen Eingangssignalen die Lenkunterstützungskraft oder andere Teilkräfte, die zu einer Gesamtsollunterstützungskraft aufsummiert werden. Aus dieser Kraft wird ein Motorsollmoment berechnet, das vom elektrischen Unterstützungsmotor als Aktuatoreinheit 30 oder als Teil davon eingestellt wird.

Ein Konzept, die hohen Sicherheitsanforderungen zu erfüllen, besteht darin, jeder Lenkfunktion eine Überwachungsfunktion zuzuordnen, die die korrekte Funktion der Lenkfunktion innerhalb definierter Grenzen permanent überwacht.

Die einfachste Möglichkeit der Umsetzung dieses Konzeptes bestünde darin, die Funktion doppelt zu rechnen und das Ergebnis zu vergleichen. Auf Grund der hohen Anforderungen an die Überwachungsfunktion, insbesondere hinsichtlich des Entwicklungsprozesses und der erforderlichen Testtiefe, und auch auf Grund der nur begrenzt zur Verfügung stehenden Rechenressourcen ist dies nicht zielführend.

Es ist eine Zielsetzung der vorliegenden Erfindung, möglichst einfache Überwachungsfunktionen 80 zu entwickeln, die deutlich komplexere Lenkfunktionen überwachen können.

Grundsätzlich werden an Entwicklung und Test und auch an die dabei zur Anwendung kommenden Prozesse bei der Überwachungsfunktion höhere Anforderungen gestellt, als an die Lenkfunktion. Deshalb ist es vorteilhaft, wenn eine Überwachungsfunktion softwaretechnisch einfache Mechanismen nutzt, die leicht implementierbar und testbar sind.

Weiterhin werden bei den Lenkfunktionen geringere Anforderungen an die Sicherheitsintegrität der Eingangsgrößen gestellt.

Bei der der Erfindung zu Grunde liegenden Aufgabe sind folgende Umstände relevant:
Auf Grund der hohen Anforderungen an das Lenkgefühl müssen häufig sehr komplexe Lenkfunktionen umgesetzt werden, bei denen wegen integrierter Regelralgorithmen, Filter und anderer interner Rückführungen von Signalen kein direkter Rückschluss von den Eingangs- auf die Ausgangsgrößen möglich ist.

Im Rahmen der vorliegenden Erfindung wird unter anderem auch ein Konzept beschrieben, welches es ermöglicht, Vorgaben - z.B. eine Anforderung eines bestimmten Solllenkwinkels über einen Fahrzeugbus oder dergleichen - von Fahrerassistenzsystemen 60 (FAS) sicher umsetzen zu können, weil für den Fahrer nicht beherrschbare Fahrsituationen erfindungsgemäß auch im Fehlerfall ausgeschlossen werden können.

Eine Herausforderung besteht dabei darin, dass die Anforderungen eines FAS 60 zu einem aktuellen Zeitpunkt nicht so weit abgesichert sind, dass diese ohne weitere Prüfung vom Lenksystem 20 umgesetzt werden können und dürfen.

Eine weitere Zielsetzung der vorliegenden Erfindung besteht darin, in unterschiedlichen Fahrzeugen und auf unterschiedlichen Steuergeräten 10 gleichermaßen funktionsfähig zu sein.

Daraus ergibt sich die Anforderung, dass die erfindungsgemäß vorgeschlagene Struktur möglichst einfach ausgebildet ist und keine Abhängigkeiten von steuergerätespezifischen Eigenschaften, wie z.B. Abtastraten oder dergleichen, aufweist.

Der Schutzbereich der vorliegenden Erfindung ist durch die beigefügten Ansprüche definiert.

Die Funktion muss robust gegenüber unterschiedlichen Applikationen und Ausprägungen der Lenkunterstützungskraft sein.

Ziel ist es, einen kritischen Fahrzustand, verursacht durch einen lenksysteminternen Fehler oder durch eine nicht situationsgemäße Anforderung eines FAS 60 zu verhindern.

Die Funktion muss aber wiederum so gestaltet sein, dass vom Fahrer oder vom FAS 60 erwünschte, ggf. auch sehr dynamische Manöver, die zur Erhöhung der Fahrzeugsicherheit dienen, zugelassen werden.

Zur Lösung wird z.B. unter anderem folgendes Vorgehen vorgeschlagen:
Es wird eine Funktion dargestellt, die im Block "Überwachung" des in den Figuren 1 und 2 dargestellten Gesamtsystems angeordnet ist.

Diese überwacht eine Sollgröße als Ausgangssignal des in der Lenkungssoftware enthaltenen Schnittstellenfunktionsmoduls 70.

Die Sollgröße kann auch mehrere Sollgrößen umfassen, die an anderer Stelle aufsummiert werden.

Dieses stellt sicher, dass die Sollgröße für den Lenkunterstützungsmotor als Aktuatoreinheit 30 keine Werte/Werteverläufe annehmen kann, die zu einer für den Fahrer nicht mehr beherrschbaren Fahrsituation führen.

Die Funktion 80 besteht aus mehreren parallelen Subüberprüfungsmodulen 81 bis 85 gemäß Figur 3.

In einem ersten Teilmodul 81 findet eine Maximalwertüberwachung einer Sollgröße statt. Wenn zum Beispiel der Betrag einer Sollkraft einen maximal zulässigen Betrag überschreitet wird eine Fehlerreaktion 87 ausgelöst.

In einem zweiten Teilmodul 82 wird der Gradient einer Sollgröße überwacht. Die Kritikalitätsgrenze kann für steigende und fallende Gradienten unterschiedlich sein. Zusätzlich können relativ zum Signal Sprünge kleinerer Amplitude zulässig sein, um den Signalverlauf im hochfrequenten Bereich nicht zu verfälschen.

In einem dritten Modul 83 wird die Überlenkbarkeit überwacht, wie dies im Zusammenhang mit Figur 4 dargestellt ist.

Mögliche Eingangsgrößen sind dabei Sensormoment $M_{Sensor}$, die aktuelle Lenkunterstützungskraft $F_{Unterstützung}$, die Ausgangskraft $F_{pos}$ eines Positionsreglers, und zwar mit den Parametern $F_{max}$, $F_{min}$, $M_{max}$.

Dabei kann es vorgesehen sein, dass die obere Kraftgrenze $F_{pos,Limit}$ und/oder die untere Kraftgrenze $F_{neg,Limit}$ bestimmt sind oder werden gemäß den nachfolgenden Beziehungen (1) bis (4), nämlich gemäß

$$F_{pos,Limit}\left(M_{Sensor}, F_{Untrstützung}\right) = F_{max} + \frac{\left(F_{max} - F_{min}\right) \cdot M_{Sensor}}{M_{max}} - \min\left(F_{Unterstützung}, 0\right), \qquad (1)$$

falls nur ein geringes Gegenmoment durch den Fahrer am Lenksystem des Fahrzeugs aufgebracht wird und somit $M_{Sensor} > -M_{max}$ gilt, gemäß

$$F_{pos,Limit}\left(M_{Sensor}, F_{Untrstützung}\right) = F_{min} + \min\left(F_{Unterstützung}, 0\right) \cdot \frac{M_{max}}{2 \cdot M_{Sensor} + M_{max}}, \qquad (2)$$

falls ein hohes Gegenmoment durch den Fahrer am Lenksystem des Fahrzeugs aufgebracht wird und somit $M_{Sensor} \leq -M_{max}$ gilt, gemäß

$$F_{neg,Limit}\left(M_{Sensor}, F_{Untrstützung}\right) = -F_{max} + \frac{\left(F_{max} - F_{min}\right) \cdot M_{Sensor}}{M_{max}} - \max\left(F_{Unterstützung}, 0\right) \qquad (3)$$

falls nur ein geringes Gegenmoment durch den Fahrer am Lenksystem (20) des Fahrzeugs (1) aufgebracht wird und somit $M_{Sensor} < M_{max}$ gilt, und/oder gemäß

$$F_{neg,Limit}\left(M_{Sensor}, F_{Untrstützung}\right) = -F_{min} - \max\left(F_{Unterstützung}, 0\right) \cdot \frac{M_{max}}{2 \cdot M_{Sensor} - M_{max}}, \qquad (4)$$

falls ein hohes Gegenmoment durch den Fahrer am Lenksystem (20) des Fahrzeugs (1) aufgebracht wird und somit $M_{Sensor} \geq M_{max}$ gilt.

Dabei bezeichnen $F_{pos,Limit}$ die obere Kraftgrenze, $F_{neg,Limit}$ die untere Kraftgrenze, $M_{Sensor}$ das mittels eines Sensors gemessene durch den Fahrer des Fahrzeugs (1) aufgebrachte Handmoment, $M_{max}$ das maximale Lenkmoment, $F_{Unterstützung}$ die aktuell aufgebrachte Lenkunterstützungskraft, $F_{min}$ eine minimale Kraft, $F_{max}$ eine maximale Kraft, min die Minimumsfunktion und max die Maximumsfunktion.

Überschreitet die Sollkraft $F_{pos}$ die obere Kraftgrenze, ist eine Ersatzreaktion 87 auszulösen.

Die obere Kraftgrenze kann auch in Abhängigkeit von der Aktion der Lenkkraftunterstützung 50 und dem Fahrerhandmoment angepasst werden.

Unterschreitet die Sollkraft $F_{pos}$ die untere Kraftgrenze, ist eine Ersatzreaktion 87 auszulösen.

Die untere Kraftgrenze kann auch in Abhängigkeit von der Aktion der Lenkkraftunterstützung 50 und dem Fahrerhandmoment angepasst werden.

Im Rahmen vorliegenden Erfindung ist die Berücksichtigung der aktuellen Lenkkraftunterstützung durch die Lenkunterstützung 50 bei der Berechnung der jeweiligen Grenzen von besonderer Bedeutung. Auf diese Weise wird realisiert, dass die Begrenzung immer gewählt ist und zum Einsatz kommt, wie es für den aktuellen Fahrzeugtyp mit der jeweils individuellen Lenkunterstützungskennung erforderlich ist.

In einem vierten Teilmodul 84 gemäß Figur 5 wird aus der aktuell vorliegenden Zahnstangengeschwindigkeit $v_{zst}$ und der zulässigen Kraft $F_{zul}$ ein Korridor oder zulässiger Bereich 104 gebildet, innerhalb dessen die Sollgröße oder der Sollwert der Regelgröße vorliegen darf.

Die Zahnstangenkraft kann aus geeigneten, im System vorliegenden Messgrößen errechnet werden, z.B. aus der Rotorgeschwindigkeit des Unterstützungsmotors als Aktuatoreinheit 30.

Sie ist für die Überwachungsfunktion 80 besonders gut geeignet, weil sie unabhängig von einer möglichen variablen Übersetzung zwischen Ritzel und Zahnstange bei verschiedenen Fahrzeugen bzw. Lenkungen ist.

Die Zahnstangengeschwindigkeit $v_{zst}$ kann als Maß für die in das System Fahrzeug pro Zeit eingebrachte Dynamik dienen. Je höher die Dynamik, desto geringer darf die Sollkraft in diesem Betriebspunkt sein um sicher zu stellen, dass das System nicht in einen kritischen Zustand gebracht werden kann.

Der Korridor oder zulässige Bereich 104 wird in seiner Breite in Abhängigkeit von der Fahrzeuggeschwindigkeit $V_{fzg}$ variiert um diesen Aspekt der Kritikalität abbilden zu können.

In einem fünften Teilmodul 85 wird geprüft, ob eine Sollgröße oder ein Sollwert einer Regelgröße ungleich Null ist und auch gleichzeitig eine Anforderung eines FAS 60 vorliegt. Dieses wird ggf. auch über eine von FAS 60 gesendete Statusinformation abgeglichen.

In einer weiteren Ausführungsform der Erfindung wird zusätzlich noch eine Möglichkeit geschaffen, mittels eines Signals die Überwachungsgrenzen bei sehr niedriger Geschwindigkeit, z.B. unterhalb von 12 km/h, aufzuweiten.

Dazu wird der Status des anfordernden FAS 60 auf einen speziell für diesen Zustand vorgesehenen Inhalt hin überprüft. Diese Anforderung, wird nun mit der Fahrzeuggeschwindigkeit abgeglichen. Dann können die Grenzen aufgeweitet werden. Beispielsweise wird diese Methode eingesetzt um ein automatisches Fahren, Rangieren und Einparken zu ermöglichen.

Zusätzlich kann hier noch die Bedingung gelten, dass der Fahrer die Hände nicht am Lenkrad 21 haben darf, bzw. das Fahrermoment darf eine bestimmte Grenze nicht überschreiten.

An dieser Stelle - oder auch sonst - kann auch ein um die Trägheit von Lenkrad 21 und Lenksäule 22 korrigiertes Moment ausgewertet werden. Wird diese Grenze überschritten erfolgt ggf. ein Abbruch der Funktion und damit kann auch ein Wechsel in den ursprünglich beschriebenen Überwachungsmodus erfolgen.

In einer weiteren Ausführungsform wird die Überwachungsfunktion 80 zur Erhöhung der Robustheit gegenüber Fehlauslösungen und zur differenzierteren Auswertung der Fahrsituation erweitert. Es wird somit vorgeschlagen, dass die Überwachungsfunktion ein erstes Mal als erste Überwachungseinheit 80-1 und ein zweites Mal als zweite Überwachungseinheit 80-2 innerhalb der Lenkfunktionsebene implementiert wird, wie dies in Figur 6 dargestellt ist.

Hierbei ist die Überwachungsfunktion 80 insgesamt als erste Komponente 80-1 in der Funktionsebene so parametrisiert, dass eine Fehlererkennung kurz vor einer Fehlererkennung in der Überwachungsebene durch die zweite Komponente 80-2 stattfindet. So können in der Überwachungsfunktion 80 insgesamt Maßnahmen eingeleitet werden, die ungewollte Systemreaktionen durch eine Fehlauslösung der Funktion in der Überwachungsebene verhindern. Das kann z.B. ein Zurücksetzten oder Reset von Integratoren oder anderen Funktionsbestandteilen sein.

**Bezugszeichenliste**

1    Fahrzeug
2    Karosserie, Rahmen
4    Rad

10    Erfassungs- und/oder Steuereinheit
11    Erfassung- und/oder Steuerleitung
12    Sensor
14    Sensor
16    Sensor

20    Lenksystem, Lenkung
21    Lenkrad
22    Lenkwelle
23    Spurstange
24    Gelenk, Lenkgelenk
25    Radträger

30    Aktuatoreinheit
40    Lenkunterstützungssteuerung
50    Lenkunterstützung, Lenkunterstützungssystem
60    Fahrassistenzsystem
70    Fahrassistenzschnittstelle

80    Überwachungsfunktion
80-1    (erste) Überwachungseinheit
80-2    (zweite) Überwachungseinheit
81    Teilüberwachungsfunktion
82    Teilüberwachungsfunktion
83    Teilüberwachungsfunktion
84    Teilüberwachungsfunktion
85    Teilüberwachungsfunktion
86    Verknüpfung, ODER
87    Auslösung, Fehlerreaktion

90      Graph
91      Ordinate
92      Abszisse
94      zulässiger Bereich

100     Graph
101     Ordinate
102     Abszisse
104     zulässiger Bereich

**Patentansprüche**

1.  Fahrassistenzsystembasiertes Lenkunterstützungsverfahren für ein Fahrzeug (1) mit einem Lenksystem (20) mit Lenkunterstützung (50) und insbesondere für ein Kraftfahrzeug zum Unterstützen eines Fahrers beim Lenken des Fahrzeugs (1) über das Lenksystem (20), bei welchem

    (i) eine Fahrsituation des Fahrzeugs (1) erfasst wird,
    (ii) in Abhängigkeit von der Fahrsituation auf das Fahrverhalten des Fahrzeugs (1) eingegriffen wird, indem das zu Grunde liegende Fahrassistenzsystem (60)

        - einen Sollwert für mindestens eine Regelgröße des Lenksystems (20) bestimmt und
        - den Sollwert über eine Fahrassistenzschnittstelle (70) vom Lenksystem (20) bedingt anfordert,

    (iii) durch eine der Fahrassistenzschnittstelle (70) nachgeschaltete und der Anforderung an das Lenksystem (20) vorgeschaltete Überwachungsfunktion (80) eine Fehleraktion (87) veranlasst wird, falls der Sollwert ein vordefiniertes Zulässigkeitskriterium nicht erfüllt, und
    (iv) durch die Fehleraktion (87) bewirkt wird,

        - dass ein vom Fahrassistenzsystem (60) bestimmter Sollwert einer Regelgröße vom Fahrassistenzsystem (60) neu bestimmt und überwacht und bedingt vom Lenksystem (20) angefordert wird und/oder
        - dass von der Überwachungsfunktion (80) und/oder vom Fahrassistenzsystem (60) ein sicherer Ersatzsollwert bereitgestellt und überwacht und bedingt vom Lenksystem (20) angefordert wird.

2.  Lenkunterstützungsverfahren nach Anspruch 1, bei welchem durch die Überwachungsfunktion (80) vom Fahrassistenzsystem (60) bestimmte Sollwerte mehrerer Regelgrößen überwacht werden, insbesondere in paralleler und/oder simultaner Weise, mittels einer ODER-Verknüpfung (86) und/oder mittels Summation.

3.  Lenkunterstützungsverfahren nach einem der vorangehenden Ansprüche, bei welchem durch die Fehleraktion (87) bewirkt wird, dass ein vom Fahrassistenzsystem (60) bestimmter Sollwert einer Regelgröße vom Lenksystem (20) nicht angefordert wird.

4.  Lenkunterstützungsverfahren nach einem der vorangehenden Ansprüche, bei welchem als Regelgröße der Wert einer Lenkunterstützungskraft, eines Lenkunterstützungsmoments, eines Lenkwinkels und/oder ein Wert im Zusammenhang mit einer Position und/oder Orientierung einer zu Grunde liegenden Aktuatoreinheit (30) und/oder eines damit betätigten Lenkelements verwendet werden.

5.  Lenkunterstützungsverfahren nach einem der vorangehenden Ansprüche, bei welchem durch die Überwachungsfunktion (80) beim Überprüfen des Zulässigkeitskriteriums mehrere Teilkriterien geprüft werden, insbesondere aus einem vorgegebenen Satz von Teilkriterien, in simultaner und/oder paralleler Weise.

6.  Lenkunterstützungsverfahren nach einem der vorangehenden Ansprüche, bei welchem das Zulässigkeitskriterium oder ein Teilkriterium als nicht erfüllt erkannt wird bzw. werden, wenn der vom Fahrassistenzsystem (60) bestimmte Sollwert der mindestens einen Regelgröße des Lenksystems (20) mit einer für einen Fahrer des Fahrzeugs (1) nicht mehr beherrschbaren Fahrsituation korrespondiert.

7.  Lenkunterstützungsverfahren nach einem der vorangehenden Ansprüche, bei welchem

- durch die Überwachungsfunktion (80) eine Maximalwertüberwachung eines Sollwerts einer Regelgröße durchgeführt wird und/oder
- das Zulässigkeitskriterium oder ein Teilkriterium als nicht erfüllt erkannt wird bzw. werden, wenn der Betrag des Sollwerts der Regelgröße einen vorgegebenen maximal zulässigen Betrag überschreitet.

8. Lenkunterstützungsverfahren nach einem der vorangehenden Ansprüche, bei welchem

- durch die Überwachungsfunktion (80) eine Überwachung eines Gradienten eines Sollwerts einer Regelgröße durchgeführt wird und/oder
- das Zulässigkeitskriterium oder ein Teilkriterium als nicht erfüllt erkannt wird bzw. werden, wenn der Wert des Gradienten eine vorgegebene obere Grenze überschreitet und/oder eine vorgegebene untere Grenze unterschreitet, wobei insbesondere in Relation zur Größe des Sollwerts kurzfristige und/oder hochfrequente Schwankungen im Sollwert im Sinne eines Tiefpassfilters behandelt werden.

9. Lenkunterstützungsverfahren nach einem der vorangehenden Ansprüche, bei welchem

- durch die Überwachungsfunktion (80) eine Überwachung im Sinne einer Überlenkbarkeit durchgeführt wird und/oder
- das Zulässigkeitskriterium oder ein Teilkriterium als nicht erfüllt erkannt wird bzw. werden, wenn der Sollwert der als Regelgröße ($F_{Position}$) verwendeten Ausgangskraft einer zu Grunde liegenden Aktuatoreinheit (30) als Positionsgeber des Lenksystems (20) eine obere Kraftgrenze ($F_{Pos,Limit}$) überschreitet und/oder eine untere Kraftgrenze ($F_{neg,Limit}$) unterschreitet, wobei insbesondere

- die obere Kraftgrenze ($F_{pos,Limit}$) und/oder die untere Kraftgrenze ($F_{neg,Limit}$), insbesondere dynamisch, in Abhängigkeit von der Lenkkraftunterstützung durch das Lenksystem (20) und/oder vom vom Fahrer aufgebrachten manuell Lenkmoment angepasst sind oder werden und/oder
- die obere Kraftgrenze ($F_{pos,Limit}$) und/oder die untere Kraftgrenze ($F_{neg,Limit}$) bestimmt sind oder werden gemäß den nachfolgenden Beziehungen (1) bis (4), nämlich gemäß

$$F_{pos,Limit}\left(M_{Sensor}, F_{Untrstützung}\right) = F_{max} + \frac{\left(F_{max} - F_{min}\right) \cdot M_{Sensor}}{M_{max}} - \min\left(F_{Unterstützung}, 0\right), \quad (1)$$

falls nur ein geringes Gegenmoment durch den Fahrer am Lenksystem (20) des Fahrzeugs (1) aufgebracht wird und somit $M_{Sensor} > -M_{max}$ gilt, gemäß

$$F_{pos,Limit}\left(M_{Sensor}, F_{Untrstützung}\right) = F_{min} + \min\left(F_{Unterstützung}, 0\right) \cdot \frac{M_{max}}{2 \cdot M_{Sensor} + M_{max}}, \quad (2)$$

falls ein hohes Gegenmoment durch den Fahrer am Lenksystem (20) des Fahrzeugs (1) aufgebracht wird und somit $M_{Sensor} \leq -M_{max}$ gilt, gemäß

$$F_{neg,Limit}\left(M_{Sensor}, F_{Untrstützung}\right) = -F_{max} + \frac{\left(F_{max} - F_{min}\right) \cdot M_{Sensor}}{M_{max}} - \max\left(F_{Unterstützung}, 0\right) \quad (3)$$

falls nur ein geringes Gegenmoment durch den Fahrer am Lenksystem (20) des Fahrzeugs (1) aufgebracht wird und somit $M_{Sensor} < M_{max}$ gilt, und/oder gemäß

$$F_{neg,Limit}\left(M_{Sensor}, F_{Untrstützung}\right) = -F_{min} - \max\left(F_{Unterstützung}, 0\right) \cdot \frac{M_{max}}{2 \cdot M_{Sensor} - M_{max}}, \quad (4)$$

falls ein hohes Gegenmoment durch den Fahrer am Lenksystem (20) des Fahrzeugs (1) aufgebracht wird und somit $M_{Sensor} \geq M_{max}$ gilt,

wenn $F_{pos,Limit}$ die obere Kraftgrenze, $F_{neg,Limit}$ die untere Kraftgrenze, $M_{Sensor}$ das mittels eines Sensors gemessene durch den Fahrer des Fahrzeugs (1) aufgebrachte Handmoment, $M_{max}$ das maximale Lenkmoment, $F_{Unterstützung}$ die aktuell aufgebrachte Lenkunterstützungskraft, $F_{min}$ eine minimale Kraft, $F_{max}$ eine maximale Kraft, min die Minimumsfunktion und max die Maximumsfunktion bezeichnen.

10. Lenkunterstützungsverfahren nach einem der vorangehenden Ansprüche, bei welchem

- durch die Überwachungsfunktion (80) eine Überwachung der Lage eines Sollwerts einer Regelgröße in Bezug auf einen Zulässigkeitsbereich durchgeführt wird, welcher definiert wird durch eine aktuell vorliegende Geschwindigkeit einer zu Grunde liegenden Aktuatoreinheit (30) und/oder eines damit betätigten Lenkelements, insbesondere einer Zahnstange, und/oder
- das Zulässigkeitskriterium oder ein Teilkriterium als nicht erfüllt erkannt wird bzw. werden, wenn der Sollwert außerhalb des aktuellen Zulässigkeitsbereichs liegt, wobei insbesondere bei der Definition des Zulässigkeitsbereichs der Wert einer Geschwindigkeit des Fahrzeugs (1) berücksichtigt wird.

11. Lenkunterstützungsverfahren nach einem der vorangehenden Ansprüche, bei welchem zur Plausibilisierung durch die Überwachungsfunktion (80)

- geprüft wird, ob bei einem von null verschiedenen Sollwert für die Regelgröße durch das Grunde liegenden Fahrassistenzsystem (60) eine Anforderung an das Lenksystem (20) vorliegt (30) und/oder
- gegebenenfalls vorliegende Statusinformation des zu Grunde liegenden Fahrassistenzsystems (60) erfasst und ausgewertet wird.

12. Lenkunterstützungsverfahren nach einem der vorangehenden Ansprüche, bei welchem die Überwachungsfunktion (80)

- eingerichtet ist,

- bei Geschwindigkeiten des Fahrzeugs (1), die eine vorgegebene minimale Geschwindigkeit, insbesondere von 12 km/h, unterschreiten, Parametergrenzen bei der Überwachung eines Sollwerts einer Regelgröße aufzuweiten, und/oder
- die Anwesenheit eines Fahrers im Fahrzeug (1), eine Berührung eines Fahrers am Lenkrad (21) des Lenksystems (20) und/oder eine Trägheit des Lenkrads (21), der Lenksäule und/oder der Lenkwelle (22) zu erfassen und zu berücksichtigen, und/oder

- zusätzlich zu einer ersten Überwachungseinheit (80-1) im Bereich der Überwachungsebene des Lenksystems (20) im Bereich der Lenkfunktionsebene des Lenksystems (20) als eine zweite Überwachungseinheit (80-2) ausgebildet ist.

13. Fahrassistenzsystembasierte Lenkunterstützung (50) für ein Fahrzeug (1) mit einem Lenksystem (20) und insbesondere für ein Kraftfahrzeug zum Unterstützen eines Fahrers beim Lenken des Fahrzeugs (1), mit einer Erfassungs- und Steuereinheit (10), welche eingerichtet ist, ein fahrassistenzsystembasiertes Lenkunterstützungsverfahren nach einem der vorangehenden Ansprüche 1 bis 12 auszuführen.

14. Fahrzeug (1) und insbesondere Kraftfahrzeug,

- mit einem Lenksystem (20) mit fahrassistenzsystembasierter Lenkunterstützung (50) zum Lenken einer Bewegung des Fahrzeugs (1) durch einen Fahrer und
- wobei die Lenkunterstützung (50) nach Anspruch 13 ausgebildet ist.

**Claims**

1. Driving-assistance-system-based power steering method for a vehicle (1) having a steering system (20) with power steering (50) and in particular for a motor vehicle for assisting a driver when steering the vehicle (1) via the steering system (20), in which:

(i) a driving situation of the vehicle (1) is sensed,

(ii) an intervention is made in the driving behaviour of the vehicle (1) as a function of the driving situation, in that the driving assistance system (60) which is used as the basis

- determines a setpoint value for at least one control variable of the steering system (20), and
- requests the setpoint value conditionally from the steering system (20) via a driving assistance interface (70),

(iii) a fault action (87) is brought about by a monitoring function (80) which is connected downstream of the driving assistance interface (70) and upstream of the request to the steering system (20), if the setpoint value does not satisfy a predefined acceptability criterion, and
(iv) the fault action (87) causes

- a setpoint value, determined by the driving assistance system (60), of a control variable to be newly determined and monitored by the driving assistance system (60) and requested conditionally by the steering system (20), and/or
- a safe equivalent setpoint value to be provided and monitored by the monitoring function (80) and/or by the driving assistance system (60) and to be conditionally requested by the steering system (20).

2. Power steering method according to Claim 1, in which setpoint values, which are determined by the the driving assistance system (60) by means of the monitoring function (80), of a plurality of control variables are monitored, in particular in a parallel and/or simultaneous fashion, by means of an OR logic operation (86) and/or by means of summation.

3. Power steering method according to one of the preceding claims, in which the fault action (87) causes a setpoint value, determined by the driving assistance system (60), of a control variable not to be requested by the steering system (20).

4. Power steering method according to one of the preceding claims, in which the value of a power steering force, of a power steering torque, of a steering angle and/or a value relating to a position and/or orientation of an underlying actuator unit (30) and/or of a steering element activated therewith are/is used as a control variable.

5. Power steering method according to one of the preceding claims, in which, during the checking of the acceptability criterion, the monitoring function (80) checks a plurality of sub-criteria, in particular from a predefined set of sub-criteria, in a simultaneous and/or parallel fashion.

6. Power steering method according to one of the preceding claims, in which the acceptability criterion or a sub-criterion is detected as not satisfied if the setpoint value, determined by the driving assistance system (60), of the at least one control variable of the steering system (20) corresponds to a driving situation which cannot be dealt with by a driver of the motor vehicle (1).

7. Power steering method according to one of the preceding claims, in which

- the monitoring function (80) carries out maximum value monitoring of a setpoint value of a control variable, and/or
- the acceptability criterion or a sub-criterion is detected as not satisfied if the absolute value of the setpoint value of the control variable exceeds a predefined maximum permissible absolute value.

8. Power steering method according to one of the preceding claims, in which

- the monitoring function (80) carries out monitoring of a gradient of a setpoint value of a control variable, and/or
- the acceptability criterion or a sub-criterion is detected as not satisfied if the value of the gradient exceeds a predefined upper limit and/or undershoots a predefined lower limit, wherein fluctuations in the setpoint value which are short-term and/or high-frequency, in particular in relation to the magnitude of the setpoint value, are treated in the manner of a low-pass filter.

9. Power steering method according to one of the preceding claims, in which

- the monitoring function (80) carries out monitoring with respect to over-steerability, and/or
- the acceptability criterion or a sub-criterion is detected as not satisfied if the setpoint value of the initial force, which is used as a control variable ($F_{Position}$), of an underlying actuator unit (30) as a position encoder of the steering system (20) exceeds an upper force limit ($F_{pos,Limit}$) and/or undershoots a lower force limit ($F_{neg,Limit}$), wherein in particular

- the upper force limit ($F_{pos,Limit}$) and/or the lower force limit ($F_{neg,Limit}$) are/is adapted, in particular dynamically, as a function of the power steering by the steering system (20) and/or of the steering torque which is applied manually by the driver, and/or

- the upper force limit ($F_{pos,Limit}$) and/or the lower force limit ($F_{neg,Limit}$) are determined in accordance with the following relationships (1) to (4), specifically according to

$$F_{pos,Limit}(M_{Sensor}, F_{assistance}) = F_{\max} + \frac{(F_{\max} - F_{\min}) \cdot M_{Sensor}}{M_{\max}} - \min(F_{assistance}, 0), \quad (1)$$

if just a low opposing torque is applied to the steering system (20) of the vehicle (1) by the driver, and therefore $M_{sensor} > -M_{max}$ applies, according to

$$F_{pos,Limit}(M_{Sensor}, F_{assistance}) = F_{\min} + min(F_{assistance}, 0)\frac{M_{max}}{2 \cdot M_{Sensor} + M_{max}}, \quad (2)$$

if a high opposing torque is applied to the steering system (20) of the vehicle (1) by the driver, and therefore $M_{sensor} \leq -M_{max}$ applies, according to

$$F_{neg,Limit}(M_{Sensor}, F_{assistance}) = -F_{\max} + \frac{(F_{\max} - F_{\min}) \cdot M_{Sensor}}{M_{\max}} - \max(F_{assistance}, 0), \quad (3)$$

if just a low opposing torque is applied to the steering system (20) of the vehicle (1) by the driver, and therefore $M_{Sensor} < M_{max}$ applies, and/or according to

$$F_{neg,Limit}(M_{Sensor}, F_{assistance}) = -F_{\min} - \max(F_{assistance}, 0)\frac{M_{max}}{2 \cdot M_{Sensor} - M_{max}}, \quad (4)$$

if a high opposing torque is applied to the steering system (20) of the vehicle (1) by the driver, and therefore $M_{Sensor} \geq M_{max}$ applies,

if $F_{pos,Limit}$ denotes the upper force limit, $F_{neg,limit}$ denotes the lower force limit, $M_{sensor}$ denotes the manual torque which is measured by means of a sensor and applied by the driver of the vehicle (1), $M_{max}$ denotes the maximum steering torque, $F_{assistance}$ denotes the currently applied power steering force, $F_{min}$ denotes a minimum force, $F_{max}$ denotes a maximum force, min denotes the minimum function and max denotes the maximum function.

10. Power steering method according to one of the preceding claims, in which

- the monitoring function (80) carries out monitoring of the position of a setpoint value of a control variable with respect to an acceptability range which is defined by a currently present speed of an underlying actuator unit (30) and/or of a steering element which is activated therewith, in particular of a steering rack, and/or
- the acceptability criterion or a sub-criterion is detected as not satisfied if the setpoint value lies outside the current acceptability range, wherein the value of a speed of the vehicle (1) is taken into account in particular in the definition of the acceptability range.

11. Power steering method according to one of the preceding claims, in which, for the purpose of plausibility checking, the monitoring function (80)

- checks whether a request to the steering system (20) by the underlying driving assistance system (60) is present (30) when there is a setpoint value for the control variable which is different from zero, and/or
- status information which is possibly present of the underlying driving assistance system (60) is sensed and evaluated.

12. Power steering method according to one of the preceding claims, in which the monitoring function (80)

- is configured

    - to extend parameter limits during the monitoring of a setpoint value of a control variable at speeds of the vehicle (1) which undershoot a predefined minimum speed, in particular of 12 km/h, and/or
    - to sense and to take into account the presence of a driver in the vehicle (1), contact of a driver with the steering wheel (21) of the steering system (20) and/or inertia of the steering wheel (21), of the steering column and/or of the steering shaft (22), and/or

    - is embodied, in addition to a first monitoring unit (80-1) in the region of the monitoring level of the steering system (20), as a second monitoring unit (80-2) in the region of the steering functional level of the steering system (20).

**13.** Driving-assistance-system-based power steering system (50) for a vehicle (1) with a steering system (20) and in particular for a motor vehicle for assisting a driver when steering the vehicle (1),
having a sensing and control unit (10) which is configured to carry out a driving-assistance-system-based power steering method according to one of the preceding Claims 1 to 12.

**14.** Vehicle (1) and in particular a motor vehicle,

    - having a steering system (20) with driving-assistance-system-based power steering (50) for the steering of a movement of the vehicle (1) by a driver, and
    - wherein the power steering (50) is embodied according to Claim 13.

## Revendications

**1.** Procédé d'assistance à la direction basé sur un système d'aide à la conduite pour un véhicule (1) doté d'un système de direction (20) avec assistance à la direction (50), et notamment pour un véhicule automobile en vue d'assister un conducteur lors de la direction du véhicule (1) par le biais du système de direction (20), procédé avec lequel

    (i) une situation de conduite du véhicule (1) est détectée,
    (ii) une intervention a lieu sur le comportement de conduite du véhicule (1) en fonction de la situation de conduite, en ce que le système d'aide à la conduite (60) sous-jacent

        - détermine une valeur de consigne pour au moins une grandeur de régulation du système de direction (20) et
        - demande conditionnellement la valeur de consigne par le système de direction (20) par le biais d'une interface d'aide à la conduite (70),

    (iii) une action sur erreur (87) est provoquée par une fonction de surveillance (80), montée en aval de l'interface d'aide à la conduite (70) et montée en amont de la demande au système de direction (20), dans le cas où la valeur de consigne ne remplit pas un critère d'admissibilité prédéfini, et
    (iv) une action sur erreur (87) a pour effet

        - qu'une valeur de consigne pour une grandeur de régulation déterminée par le système d'aide à la conduite (60) est nouvellement déterminée et surveillée, et demandée conditionnellement par le système de direction (20) et/ou
        - qu'une valeur de consigne de substitution fiable est fournie par la fonction de surveillance (80) et/ou par le système d'aide à la conduite (60), puis surveillée et demandée conditionnellement par le système de direction (20).

**2.** Procédé d'assistance à la direction selon la revendication 1, avec lequel les valeurs de consigne de plusieurs grandeurs de régulation déterminées par le système d'aide à la conduite (60) sont surveillées par la fonction de surveillance (80), notamment en parallèle et/ou de manière simultanée, au moyen d'une relation OU (86) et/ou au moyen de la sommation.

**3.** Procédé d'assistance à la direction selon l'une des revendications précédentes, avec lequel l'action sur erreur (87) a pour effet qu'une valeur de consigne d'une grandeur de régulation déterminée par le système d'aide à la conduite (60) n'est pas demandée par le système de direction (20).

4. Procédé d'assistance à la direction selon l'une des revendications précédentes, avec lequel la grandeur de régulation utilisée est la valeur d'une force d'assistance à la direction, un couple d'assistance à la direction, un angle de braquage et/ou une valeur en relation avec une position et/ou une orientation d'une unité d'actionneur (30) sous-jacente et/ou d'un élément de direction actionné par celle-ci.

5. Procédé d'assistance à la direction selon l'une des revendications précédentes, avec lequel plusieurs critères partiels sont contrôlés par la fonction de surveillance (80) lors du contrôle du critère d'admissibilité, notamment issus d'un jeu prédéfini de critères partiels, de manière simultanée et/ou en parallèle.

6. Procédé d'assistance à la direction selon l'une des revendications précédentes, avec lequel le critère d'admissibilité ou un critère partiel est ou sont reconnu(s) comme non rempli(s) lorsque la valeur de consigne de l'au moins une grandeur de régulation du système de direction (20) déterminée par le système d'aide à la conduite (60) correspond à une situation de conduite qui n'est plus maîtrisable pour un conducteur du véhicule (1).

7. Procédé d'assistance à la direction selon l'une des revendications précédentes, avec lequel

- une surveillance de valeur maximale d'une valeur de consigne d'une grandeur de régulation est effectuée par la fonction de surveillance (80) et/ou
- le critère d'admissibilité ou un critère partiel est ou sont reconnu (s) comme non rempli(s) lorsque la valeur absolue de la valeur de consigne de la grandeur de régulation dépasse une valeur absolue maximale admissible prédéfinie.

8. Procédé d'assistance à la direction selon l'une des revendications précédentes, avec lequel

- une surveillance d'un gradient d'une valeur de consigne d'une grandeur de régulation est effectuée par la fonction de surveillance (80) et/ou
- le critère d'admissibilité ou un critère partiel est ou sont reconnu (s) comme non rempli (s) lorsque la valeur du gradient dépasse une limite supérieure prédéfinie et/ou devient inférieure à une limite inférieure prédéfinie, les fluctuations à court terme et/ou à haute fréquence dans la valeur de consigne étant notamment traitées dans le sens d'un filtre passe-bas en relation avec la grandeur de la valeur de consigne.

9. Procédé d'assistance à la direction selon l'une des revendications précédentes, avec lequel

- une surveillance dans le sens d'un braquage excessif est effectuée par la fonction de surveillance (80) et/ou
- le critère d'admissibilité ou un critère partiel est reconnu comme non rempli lorsque la valeur de consigne de la force initiale utilisée comme grandeur de régulation ($F_{Position}$) d'une unité d'actionneur (30) sous-jacente en tant que transmetteur de position du système de direction (20) dépasse une limite de force supérieure ($F_{pos,limit}$) et/ou devient inférieure à une limite de force inférieure ($F_{neg,limit}$), notamment
- la limite de force supérieure ($F_{pos,limit}$) et/ou la limite de force inférieure ($F_{neg,limit}$) étant notamment adaptée(s) dynamiquement en fonction de l'assistance à la force de direction par le système de direction (20) et/ou du couple de direction manuel appliqué par le conducteur et/ou
- la limite de force supérieure ($F_{pos,limit}$) et/ou la limite de force inférieure ($F_{neg,limit}$) étant déterminée (s) conformément aux relations (1) à (4) ci-après, à savoir conformément à

$$F_{pos,limit}(M_{Sensor}, \ F_{Unterst\ddot{u}tzung}) = F_{max} + \frac{(F_{max} - F_{min}) \cdot M_{Sensor}}{M_{max}} - min(F_{Unterst\ddot{u}tzung}, 0), \quad (1)$$

dans le cas où seul un faible couple opposé est appliqué par le conducteur au système de direction (20) du véhicule (1) et ainsi $M_{Sensor} > -M_{max}$, conformément à

$$F_{pos,limit}(M_{Sensor}, \ F_{Unterst\ddot{u}tzung}) = F_{min} + min(F_{Unterst\ddot{u}tzung}, 0) \cdot \frac{M_{max}}{2 \cdot M_{Sensor} + M_{max}}, \quad (2)$$

dans le cas où un couple opposé élevé est appliqué par le conducteur au système de direction (20) du véhicule (1) et ainsi $M_{Sensor} \leq -M_{max}$, conformément à

$$F_{neg,limit}(M_{Sensor}, F_{Unterstützung}) = F_{max} + \frac{(F_{max} - F_{min}) \cdot M_{Sensor}}{M_{max}} - \max(F_{Unterstützung}, 0), \quad (3)$$

dans le cas où seul un faible couple opposé est appliqué par le conducteur au système de direction (20) du véhicule (1) et ainsi $M_{sensor} < -M_{max}$, et/ou conformément à

$$F_{neg,limit}(M_{Sensor}, F_{Unterstützung}) = F_{min} + \max(F_{Unterstützung}, 0) \cdot \frac{M_{max}}{2 \cdot M_{Sensor} + M_{max}}, \quad (4)$$

dans le cas où un couple opposé élevé est appliqué par le conducteur au système de direction (20) du véhicule (1) et ainsi $M_{sensor} \geq M_{max}$,
lorsque $F_{pos,limit}$ désigne la limite de force supérieure, $F_{neg,limit}$ la limite de force inférieure, $M_{Sensor}$ le couple manuel mesuré au moyen d'un capteur appliqué par le conducteur du véhicule (1), $M_{max}$ le couple de direction maximal, $F_{Unterstützung}$ la force d'assistance à la direction actuellement appliquée, $F_{min}$ une force minimale, $F_{max}$ une force maximale, min la fonction minimale et max la fonction maximale.

10. Procédé d'assistance à la direction selon l'une des revendications précédentes, avec lequel

- une surveillance de la position d'une valeur de consigne d'une grandeur de régulation en référence à une plage d'admissibilité est effectuée par la fonction de surveillance (80), laquelle est définie par une vitesse actuellement en présence d'unité d'actionneur (30) sous-jacente et/ou d'un élément de direction actionné par celle-ci, notamment une crémaillère, et/ou
- le critère d'admissibilité ou un critère partiel est ou sont reconnu (s) comme non rempli (s) lorsque la valeur de consigne se trouve en dehors de la plage d'admissibilité actuelle, la valeur d'une vitesse du véhicule (1) étant prise en compte notamment lors de la définition de la plage d'admissibilité.

11. Procédé d'assistance à la direction selon l'une des revendications précédentes, avec lequel, en vue de vérifier la plausibilité au moyen de la fonction de surveillance (80),

- un contrôle est effectué afin de vérifier si, en présence d'une valeur de consigne différente de zéro de la grandeur de régulation, il existe (30) une demande au système de conduite (20) par le système d'aide à la conduite (60) sous-jacent et/ou
- des informations d'état éventuellement présentes du système d'aide à la conduite (60) sous-jacent sont acquises et interprétées.

12. Procédé d'assistance à la direction selon l'une des revendications précédentes, avec lequel la fonction de surveillance (80)

- est conçue pour
- en présence de vitesses du véhicule (1) qui sont inférieures à une vitesse minimale prédéfinie, notamment de 12 km/h, élargir les limites des paramètres lors de la surveillance d'une valeur de consigne d'une grandeur de régulation, et/ou
- détecter et prendre en compte la présence d'un conducteur dans le véhicule (1), un contact par un conducteur du volant de direction (21) du système de direction (20) et/ou une inertie du volant de direction (21), de la colonne de direction et/ou de l'arbre de direction (22), et/ou
- en plus d'une première unité de surveillance (80-1) dans la zone du plan de surveillance du système de direction (20), est réalisée sous la forme d'une deuxième unité de surveillance (80-2) dans la zone du plan fonctionnel de direction du système de direction (20).

13. Assistance à la direction (50) basée sur un système d'aide à la conduite pour un véhicule (1) doté d'un système de direction (20), et notamment pour un véhicule automobile en vue d'assister un conducteur lors de la direction du véhicule (1),

comprenant une unité d'acquisition et de commande (10) qui est conçue pour mettre en œuvre un procédé d'assistance à la direction basé sur un système d'aide à la conduite selon l'une des revendications précédentes 1 à 12.

14. Véhicule (1) et notamment véhicule automobile

- comprenant un système de direction (20) avec assistance à la direction (50) basé sur un système d'aide à la conduite destiné à diriger un mouvement du véhicule (1) par un conducteur et
- l'assistance à la direction (50) étant configurée selon la revendication 13.

FIG. 1

FIG. 2

FIG. 3

FIG. 4

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   FR 3026708 A1